# EUROPEAN PATENT SPECIFICATION

(11) **EP 0 571 010 B1**
(45) Date of publication and mention of the grant of the patent: **12.03.1997**
(21) Application number: 93201113.3
(22) Date of filing: 16.04.1993
(51) Int. Cl.: H04N 1/40

(54) **An improved frequency modulation halftoning method**
Verbessertes Verfahren zur frequenzmodulierten Halbtonrasterung
Procédé perfectionné pour l'obtention de demi-teintes à modulation de fréquence

(30) Priority: 22.05.1992 DE 4216931
(43) Date of publication of application: 24.11.1993
(73) Proprietor: AGFA-GEVAERT naamloze vennootschap, B-2640 Mortsel (BE)
(72) Inventor: Balser, Klaus, D-6100 Darmstadt (DE); Fischer, Jean, D-6242 Kronberg (DE); Delabastita, Paul, B-2018 Antwerpen (BE)

(56) References cited:
- COMPUTER GRAPHICS vol. 25, no. 4, July 1991, pages 81 - 90 L. VELHO ET AL. 'Digital Halftoning with Space Filling Curves'
- IEEE COMPUTER GRAPHICS AND APPLICATIONS May 1982, NEW YORK (US) pages 47 - 52 I. H. WITTEN ET AL. 'Using Peano Curves for Bilevel Display of Continuous-Tone Images'
- PROCEEDINGS OF THE SOCIETY FOR INFORMATION DISPLAY vol. 27, no. 4, 1986, NEW YORK (US) pages 305 - 308 G. S. FAWCETT ET AL. 'Halftoning techniques using error correction'
- Research Report RZ 1060, (*38164) of IBM Zürich Research Laboratory, P.Stucki: Mecca - A multiple error correction computation algorithm for bi-level image hardcopy reproduction; 03.02.1981, pages 12-13

## Description

### 1. Field of the invention.

The present invention relates to a method for halftoning continuous tone images. In particular the method relates to an improved method of frequency modulation screening.

### 2. Background of the invention.

A number of reproduction methods are only capable of reproducing a small number of image tones. For example, offset printing is only capable of printing two tone values i.e. deposit ink or not. In order to reproduce images having continuous tones, a halftoning or screening technique is used.

A halftoning technique converts a density value into a geometric distribution of binary dots that can be printed. The eye is not capable to see the individual halftone dots, and only sees the corresponding "spatially integrated" density value.

Two main classes of halftoning techniques have been described for use in the graphic arts field. These two techniques are known as "amplitude modulation screening" and "frequency modulation screening".

According to amplitude modulation screening, the halftone dots, that together will give the impression of a particular tone, are arranged on a fixed geometric grid. By varying the size of the halftone dots the different tones of an image can be simulated. Consequently this technique can also be called "dot size modulation screening".

According to frequency modulation screening the distance between the halftone dots is modulated rather then their size. This technique, although well known in the field of low resolution plain paper printers, has not obtained much attention for offset printing and other high end printing methods, probably because of the disadvantages to be discussed further on.

Both classes of halftone techniques are used in combination with a digital film recorder. A typical digital film recorder consists of a scanning laser beam exposing a photosensitive material at high resolution. The "grid" that defines the resolution at which the laser beam can be switched ON or OFF, usually has a pitch in the range of 1/1800 of an inch. The photosensitive material can be a photographic film, from which later on a printing plate is prepared by means of photomechanical techniques. The smallest addressable unit on a recorder is often called a "micro dot", "recorder element", or "rel".

The two classes of halftoning techniques, each with some of their variants, will now be reviewed, and their advantages and disadvantages will be discussed. The most important characteristics of a screening or halftoning technique for faithfully reproducing a continuous tone image include:
1) The rendering characteristics, more specifically the capability to render spatial detail in the original image content without the introduction of artifacts like moire, textures and noise, as well as the capability to render a full range of tones.
2) The photomechanical characteristics of the halftone dots produced by the algorithm. These characteristics will determine how consistently halftone dots can be recorded, copied or duplicated in the different steps of the photomechanical preparation of the printing plates.
3) The behaviour of the halftones on an offset printing press.
4) The speed performance that can be achieved with the technique.

Amplitude modulation screening has as its major advantage that it can be easily implemented as a fast algorithm for electronic screening of an image and, that it has good photomechanical reproduction characteristics. However an important disadvantage of amplitude modulation screening is the fact that unwanted patterns within the halftoned image may occur. Depending on their origin, these patterns are called subject moire, color moire and internal moire.

Subject moire results from the geometric interaction between periodical components in the original subject matter, and the halftone screen itself. For an easy understanding of this problem, it is convenient to use the Fourier transform. An analysis is done in the article "Fourier Spectrum of Halftone Images", by D. Kermisch and P.G. Roetling in the Journal of the Optical Society of America, Vol. 65, no. 6, 1975, pp. 716-720.

Solutions to reduce subject moire are disclosed in e.g. US-A-5.130.821, EP-A-369302 and EP-A-488324. However these solutions do not completely solve the problem.

Color moire results from interferences between the halftones of the different color separations of the image. To reduce this problem it has been suggested to use screen angles for the different color separations that are shifted by 60° with respect to each other. Several disclosures relate to the problem of generating screens with these angles or close approximations thereof. See for example US-A-4.419.690, US-A-4.350.996, US-A-4.924.301 and US-A-5.155.599. It has also been described to use other combinations of angles, frequencies or relative phases of the halftone dot patterns for the different color separations to overcome the problem of color moire. See for example US-A-4.443.060, US-A-4.537.470 and EP-A-0 501.126.

Internal moire are patterns resulting from the geometric interaction with the addressable grid on which the halftones are generated. Methods to reduce internal moire are usually based on the introduction of a random element that breaks up or "smears" the phase error that periodically builds up as a consequence of the frequency and angle relation between the halftone screen and the addressable grid on which it is rendered. Examples of such techniques are disclosed in US-A-4,456,924, US-A-4,499,489, US-A-4,700,235, US-A-4,918,622, US-A-5,150,428 and WO-A-90/04898.

None of the variants of the dot size modulation screening are capable of completely eliminating the moire problems and dot frequency modulation screening techniques have therefore been suggested to further reduce the problem.

Various dot frequency modulation screening techniques have been disclosed and they can be divided into the following subclasses:
1) Point to Point thresholding based techniques,
2) Error Diffusion along a line by line, column by column scan (and variations).
3) Error Propagation along a Hilbert scan (and variations).
4) Special techniques.

A special technique is disclosed in DE-A-29,31,092, and further developed in US-A-4,485,397.

The most representative technique of point to point thresholding is the halftoning based on the "Bayer" dither matrix Bayer, B.E., "An optimum method for two level rendition of continuous-tone pictures", Proc. IEEE International Conference on Communications, Conference Record, pp. (26-11), (26-15)., 1973. This Bayer dither matrix has a size that is a power of two, and contains threshold values that are arranged in such a fashion that, when thresholded against increasing levels of density, every halftone dot is "as far away as possible" from the halftone dots that are used to render the lower density levels. A number of variations on the ordering of the threshold values in the matrix exist, which are known under the names of the "Lippel and Kurland", and the "Jarvis" dither matrix (Stoffels, J.C., Moreland J.F., "A survey of Electronic Techniques for Pictorial Reproduction", IEEE Transactions on Communications, Vol. COM-29, No. 12, Dec. 1981, pp. 1898-1925)

Another Point to Point thresholding technique uses a "Blue Noise Mask" instead of a Bayer dither matrix. It is described in US-A-5,111,310. The Blue Noise Mask is the result of an optimization (filtering) performed iteratively (for the subsequent threshold "layers") on the Fourier transform of the threshold matrix.

The halftone dot patterns produced by the Bayer dither matrix contain strong periodical components, visible as "texture", and the corresponding power spectrums are explicitly "spiky". This can potentially create moire problems similar to the Dot Size modulation algorithms. However, because the energy of the periodical dither components are much more evenly "spread" over the different harmonics, and because most of them have a relatively high frequency, compared to the Dot Size modulation, the aliasing that will occur is much less disturbing.

The "Blue Noise Mask" threshold matrix produces distributions of halftone dots of which the two dimensional power spectrum is "continuous", rather than "spiky". This method is therefore free of periodical aliasing problems that occur with the Dot Size modulation methods or with the Bayer dither matrix.

The continuous character of the power spectrum of the Blue Noise Mask technique suggests already that at least some energy is also present in the very low frequency bands of the spectrum. This energy at low -visible- frequencies is one of the reasons why tints rendered with this techniques may appear grainy. The relation between "graininess" and the shape of the frequency spectrum is extensively discussed by Ulichney Robert, "Digital Halftoning", MIT Press Cambridge Massachusetts, 1987, ISBN 0-262-21009-6.

The Bayer dither matrix halftones do not behave very well on an offset press. The gradation curve is "bumpy" and strongly dependent on how the press is ran, especially in the tone range where the halftone dots start to connect. The problems are the same as with Dot Size modulation halftones with extremely high rulings.

The "Blue Noise Mask" halftones behave much better. The range over which the halftone dots connect is spread along the whole tone scale, and although the press gain is high, it is stable and easy to control. The metaphor to see the "Blue Noise Mask" technique as a method of using a continuous range of screen rulings, all at the same time, helps to understand this.

All Point to Point thresholding techniques share the advantage that, once the threshold matrices have been calculated, the actual halftoning process is fast, just as fast as the fastest forms of Dot Size modulation techniques. However, they also share the limitation that halftone dot distributions at higher density values have to be built "on top of" the distributions at lower density values. This makes it impossible to optimize the halftone dot distributions at each individual density level.

Perhaps the best known of all "Dot Frequency modulation" techniques is the error diffusion algorithm. Images are processed line by line, column by column, and the error that occurs as a result of the binarization (or, in a more general context, the quantization) of the image data during the rendering is "diffused" to one or more of the unprocessed pixels. Depending on exactly how this error is diffused -to how many pixels and with which weights-a number of algorithms can be distinguished that usually have adopted the names of their inventors. Best known is the Floyd and Steinberg algorithm (Floyd, R.W., and L. Steinberg, "An adaptive algorithm for spatial greyscale", Proc. SID, vol. 17/2, pp. 75-77.), but also the Jarvis, Judice and Ninke filter (Jarvis, J.F., C.N. Judice, and W.H. ninke (1976) "A new technique for displaying continuous tone pictures on bilevel displays", IEEE Tran. on Commun., vol. COM-24, pp. 891-898.), the Stucki filter (Stucki, P. (1979), "MECCA, - a multiple error correcting computation algorithm for bilevel hardcopy reproduction", Research Report RZ1060, IBM Research Laboratory, Zurich, Switzerland.), and the Stevenson and Arce (Stevenson, R.L. and G.R. Arce (1985), "Binary Display of hexagonally sampled continuous tone images", J. Opt. Soc. Am., vol 2, no. 7, pp. 1009-1013.) should be mentioned.

There exist numerous variations on the basic error diffusion algorithms. A simple variation consists of processing the pixels according to a "serpentine" sequence : the direction of error diffusion is from left to right for the "even" lines, and from right to left for the "odd" lines (or vice versa). Ulichney (Ulichney Robert, "Digital Halftoning", MIT Press Cambridge Massachusetts, 1987, ISBN 0-262-21009-6.) describes the use of error diffusion in combination with random perturbated weights as a method to reduce the "worm like" textures that can occur around the 50% tint level. One variation that is of importance related to our invention is the error diffusion with one, randomly selected weight. In this variation the error is ENTIRILY distributed to only ONE of the unprocessed pixels, which is randomly selected in the close neighbourhood of the pixel being processed.

Instead of perturbating the weights, it is also possible to perturbate the threshold against which the pixel values are compared for the binarization. Other methods to reduce the worm like effects are also disclosed in US-A-5,130,823 and US-A-5,150,429.

In US-A-5,130,819 the error that is diffused is the error as averaged over a small area of already processed pixels, instead of the local error at only one pixel position.

Because the error diffusion techniques are designed to minimize both the local and the global error between the original image content and the halftone, they have superior rendering characteristics when compared with the thresholding based frequency modulation techniques. Detail rendition is excellent, and tints look less grainy. In some cases however, a form of "edge enhancement" is introduced that is not always desirable.

The printing characteristics of the standard error diffusion techniques are not very desirable. This can be explained by means of the relation between total dot circumference versus integrated dot area for the Floyd and Steinberg algorithm. At low densities, the individual halftone dots are disconnected, and the dot circumference increases proportionally with the number of dots and the integrated dot area. At a certain tint, the halftone dots start to connect, and the total dot circumference increases less than proportionally with the integrated dot area. Around 50% however, the algorithm produces checkerboard like patterns of which the circumference is very high with respect to the integrated dot area. Above 50%, the same behaviour is symmetrically repeated. We have found that the transition from a less to a more ordered halftone dot distribution around 50%, results in irregularities in the press gain, that are highly affected by the press settings, and can cause gradation and neutral balance instability. The situation is in that regard better for the variations on the standard error diffusion algorithm that suppress this tendency to produce textures around the 50% tint level.

The need for calculation and diffusion of error in the class of Error Diffusion techniques make them inherently slower than the Dot Size modulation and the Point to Point thresholding based techniques described above. The error diffusion techniques with more weights are slower than the ones with less weights.

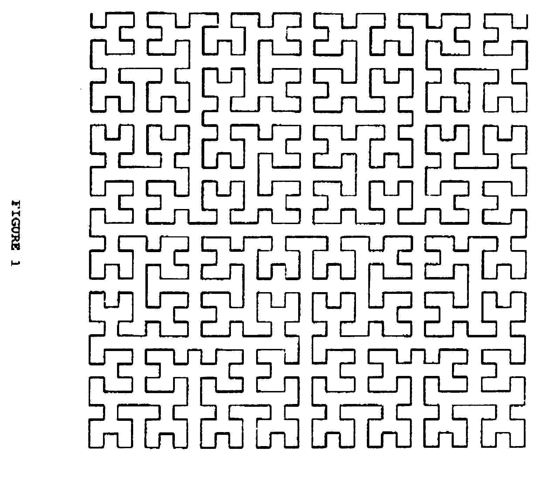

All of the above Error diffusion algorithms have in common that the order of processing the pixels is straightforward: from left to right or vice versa, and from top to bottom or vice versa. A different approach was taken by Witten and Neal in their article ( Witten Ian H., and Radford M. Neal, "Using Peano Curves for Bilevel Display of Continuous-Tone Images", IEEE CG&A, May 1982, pp. 47-52.). The subject of their invention was to change the ordering itself of the pixel processing : In their method, the error is always propagated from the previous to the next pixel in an order, that follows the path of what is known under the name of the "Peano Curve". As suggested in "Digital Halftoning with Space Filling Curves", Luiz Velho, Jonas de Miranda Gomes, ACM Computer Graphics, Vol. 25, no. 4, 1991, other curves can also be used, like for example the "Hilbert Curve" shown in Figure 1. All of these curves share the property that they are "space filling deterministic fractal curves".

The rendering characteristics of the Hilbert and Peano scan methods are comparable to those of the Floyd and Steinberg algorithm, but the speed that can be achieved is faster than the fastest error diffusion algorithm (the one with one weight), because there is no need to STORE the sum of the propagated error with the value of the next in order pixel. Instead, this sum can immediately be used to determine the halftone value, after which a new error is calculated. This high achievable speed makes the error propagation algorithm very attractive for processing of high resolution images.

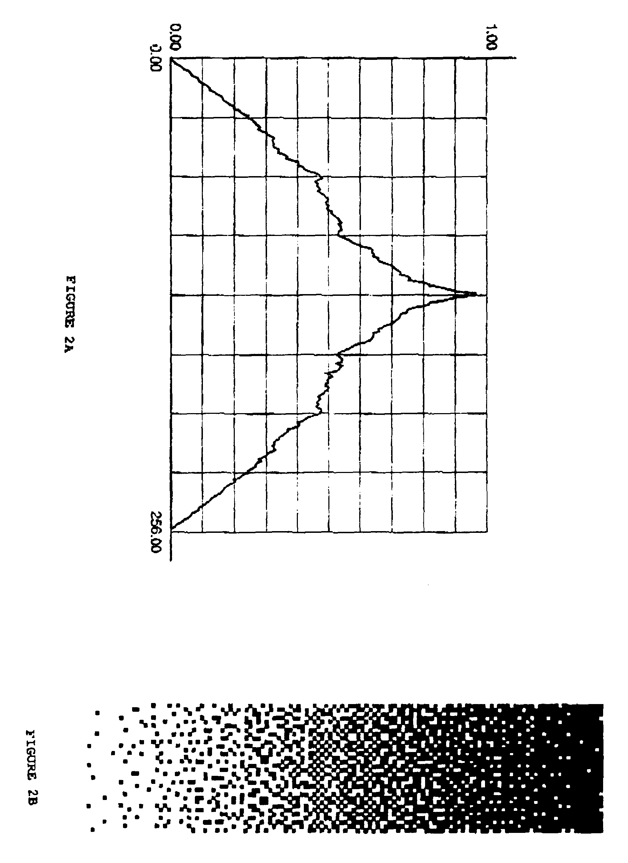

Unfortunately, the Hilbert and Peano scan methods suffer from the same problem as the Floyd and Steinberg algorithms in that they have a tendency to produce strong patterns and textures at certain integrated dot areas. As Figure 2 shows, the appearance of these textures causes the dot circumference to change irregularly along the tone scale, causing instabilities in gradation and neutral balance when these tints are printed on an offset press.

The prior art document "Halftoning techniques using error correction" by G.S. Fawcett et al. published in Proceedings of the Society for Information Display. Vol. 27, nr. 4, New-York, USA, pages 305-308 discloses a method for screening a continuous tone image according to the error-diffusion algorithm, in which unprocessed image pixels are selected according to a space filling two-dimensional curve. This prior art method suffers from the above mentioned problems.

### 3. Summary of the invention.

It is an object of the invention to provide an improved method for screening a continuous tone image using a frequency modulation screening technique.

Further objects of the present invention will become clear from the description hereinafter.

According to the present invention there is provided a method for screening a continuous tone image according to claim 1, wherein the space filling two-dimensional curve is randomized.

### 4. Brief description of the drawings.

The present invention is illustrated by way of example and without the intention to limit the invention thereto with the following drawings:
Figure 1 shows the Hilbert curve
Figure 2a shows the dot circumference versus the tone value (0=minimum density, 256-maximum density) for a halftoning wherein the pixels are processed in the order of the Hilbert curve.
Figure 2b shows a halftoned tone scale obtained by processing the image pixels in the order described by the Hilbert curve.
Figure 3 shows a schematic representation of a circuit for implementing a halftoning method according to the invention.
Figure 4 shows a schematic representation of a circuit for processing an image in bands.
Figure 5a shows a randomized Hilbert curve.
Figure 5b shows the dot circumference versus the tone value (0=minimum density, 256=maximum density) for a halftoning wherein the pixels are processed in the order of a randomized Hilbert curve.
Figure 5c shows a halftoned tone scale obtained by processing the image pixels in the order described by a randomized Hilbert curve.
Figure 6a shows the order of processing image pixels when the image is recursively subdivided into matrices.
Figure 6b shows the dot circumference versus the tone value (0=minimum density, 256=maximum density) for a halftoning wherein the pixels are processed in an order obtained by recursively subdividing the image into matrices.
Figure 7 shows a schematic representation of a circuit for implementing a halftoning method according to the invention wherein a weighted average of the difference between the tone value of at least two image pixels and their corresponding reproduction values is diffused over a number of pixels.

### 5. Detailed description of the invention.

According to the method in connection with the present invention, the pixels of a contone image are halftoned in an order which is described by a randomized space filling two dimensional curve. The halftoning of a pixel in the order is achieved by determining the halftone value that approximates best the contone pixel value, calculating the difference between the contone and the halftone value, and adding at least a portion of that error to one or more of the pixels that are next in order.

The diffusion or propagation of error provides rendering qualities to the algorithm that are comparable to those of the known Error Diffusion or Propagation algorithms. The randomized nature of the path of pixel processing avoids the occurence of patterns and textures that deteriorate the printability of the halftones. If error is only propagated to the next pixel in order of halftoning, a performance can be achieved that equals that of the Error Propagation along the Peano scan.

With the term "randomized space-filling two dimensional curve" is meant a two dimensional curve that connects all image pixels and that in principal is deterministic but which deterministic character of the curve is broken up by randomizing the curve at a number of points. A particular advantageous randomized space-filling two dimensional curve is a randomized space-filling deterministic fractal.

A randomized space-filling two dimensional curve may be obtained in a number of ways. For, example the image pixels may be processed by selecting each pixel at random each time a new unprocessed pixel needs to be selected.

According to another alternative method, the image may be divided in a number of matrices of unprocessed image pixels. Each of the image pixels within a matrix is then processed by selecting at random a pixel within the matrix until all have been selected. Once a matrix has been processed a next one is processed until all have been processed. The order in which the matrices are processed again may be at random or may be in a particular order e.g. from left to right and top to bottom.

A further variant of the above method is subdividing the image recursively into submatrices until the size of a matrix matches a pixel. At each subdivision, the order in which the matrices will be processed can be determined at random.

According to a still further method the order in which to select pixels is described by a two dimensional space-filling deterministic fractal curve, e.g. the Hilbert curve or Peano curve, which is randomized at certain points to break up its deterministic structure.

The invention will now be illustrated by the following embodiments, without the intention however to limit the invention thereto.

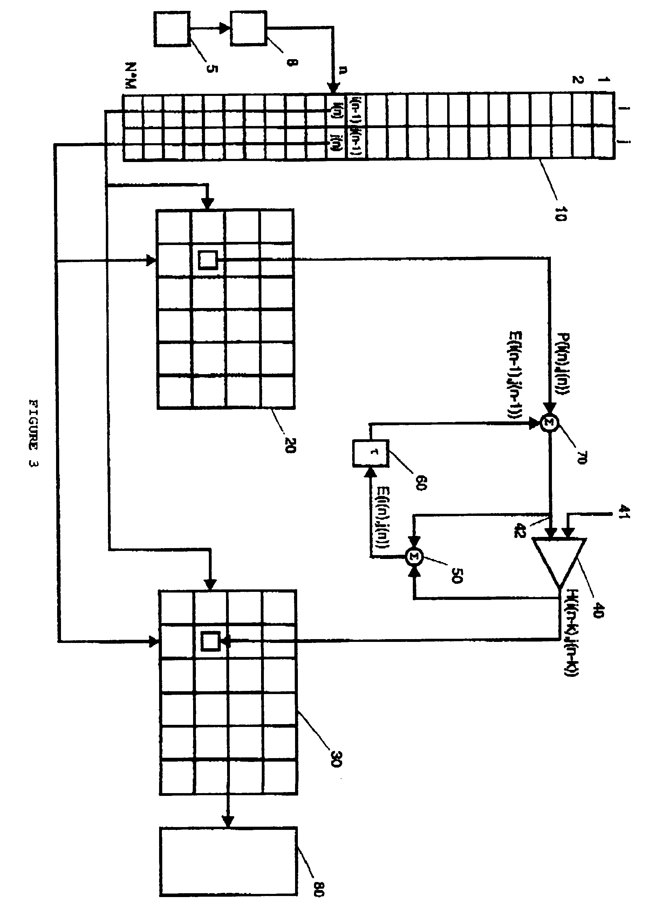

Figure 3 shows a circuit to perform the new halftoning technology in combination with a binary recording device. First the different building blocks of this circuit are described, later on its operation will be explained.

Block (20) is a memory block containing the contone pixel values of an image. Typically these are 8 bit values, organized as N lines with M columns. Block (30) is a memory block with the same lay out as block (20), in which the halftoned pixel values will be stored. In the case of a binary recording device, every halftoned pixel word has a length of 1 bit. Block (80) is a device capable of recording the information in block (30) on a substrate. Block (70) is an arithmetic unit capable of calculating the sum of the pixelvalue P(i,j) and the error E at the output of a delay register (60). The conversion of a contone pixel value into a halftoned pixel value takes place in block (40). This conversion may be based on a thresholding operation: if the contone value at point (i,j) is below the value of 128, a value "0" is stored in the halftone memory, otherwise a "1" is stored. Block (50) contains an arithmetic unit that is capable to calculate the error between the contone value at point (42), i.e. the sum of the original contone value and the error, and the halftoned pixel value, and to store it in the delay register (60). Block (8) is a counter that sequences the processing of the N*M pixels of the image. Block (10) is LUT with N*M entries (one for every image pixel), and a UNIQUE combination of a row and column address that corresponds with one pixel position in the image. Two methods to calculate such a table are given later. Block (5) is a clock.

The operation of the diagram is now explained. At every clock pulse, the counter (8) is incremented, and a new pair of coordinates (i(n),j(n)) is obtained from block (10). These coordinates are used as address values to the pixel memory (20), to obtain a contone pixel value P(i(n),j(n)). This pixel value is immediately added to the error E(i(n-1),j(n-1)), that was stored in register (60) after the previous halftone step, and the sum of both is compared to the threshold value (41) in block (40). The outcome of the thresholding operation determines the value H(i(n),j(n)) that will be written into the halftone pixel memory at position (i(n),j(n)). At the same time a new error E(i(n),j(n)) is calculated from the difference between P(i(n),j(n)) and H(i(n),j(n)), and stored in the delay register (60). The circuit is initialized by setting the counter (8) to 1 the error to 128, and the operation is terminated when the counter reaches the level N*M. After that, the halftone memory (30) is read out line by line, column by column, and its contents are recorded on a substrate by the recorder (80).

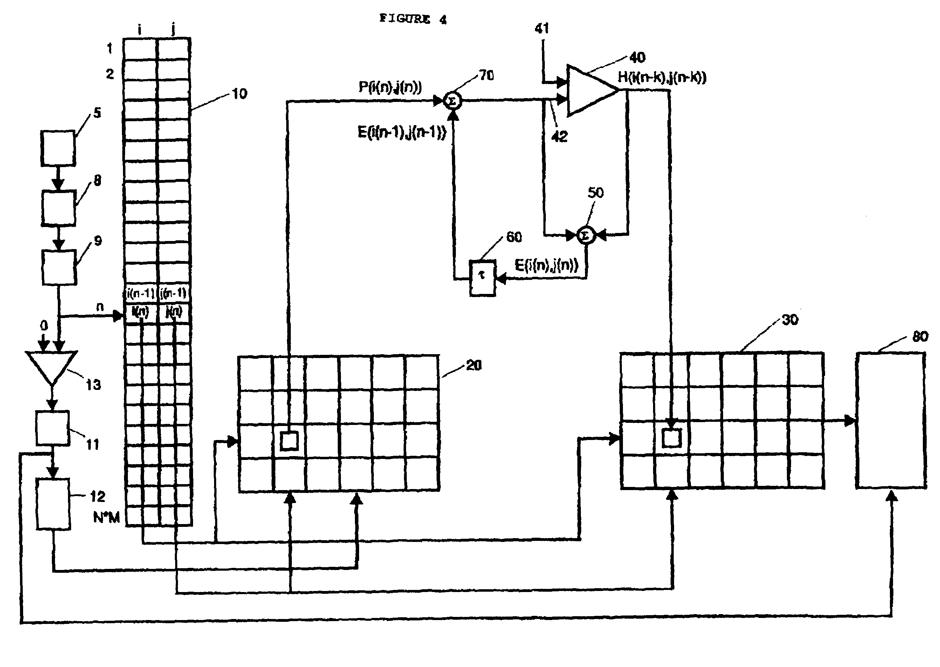

The circuit in Figure 3 requires large amounts of memory: enough memory is needed to contain the entire contone image, the entire halftoned image, as well a LUT with N*M entries containing the sequence of address values to control the order of pixel processing. An alternative implementation is therefore disclosed that requires less memory. The reduction of memory requirements is obtained by subdividing the image into bands that are processed and recorded one by one. Figure 4 shows the diagram for the case of bands with 4 lines.

The circuit of figure 4 is an extension of the circuit in figure 3. In the circuit of figure 4 however the pixel memory block (20) and the halftone memory block (30) contain only 4 lines of image data. Correspondingly, the LUT (10) contains only coordinate pairs for 4*M data entries. In between the pixel counter (8) and the addressing of LUT (10) is placed a modulo 4*M arithmetic unit (9). Block (11) moves image data from a mass storage (12), e.g. a hard disk, to pixel memory (20). Block (11) also contains a detector (13) that signals when the output of arithmetic unit (9) equals 0.

The operation of the circuit in figure 4 is as follows. When the output of arithmetic unit (9) is 0, block (11) moves 4 lines of image data from mass storage (12) to pixel memory (20). These 4∗M pixels may then be halftoned according to the method of the present invention. After 4∗M clock pulses a new set of 4 lines of image pixels will be moved from mass storage (12) to pixel memory (30). The 4∗M halftoned pixels contained in memory (30) are also recorded on a substrate by recording unit (80).

Two methods are presented now to obtain the contents of block (10) in Figure 3.

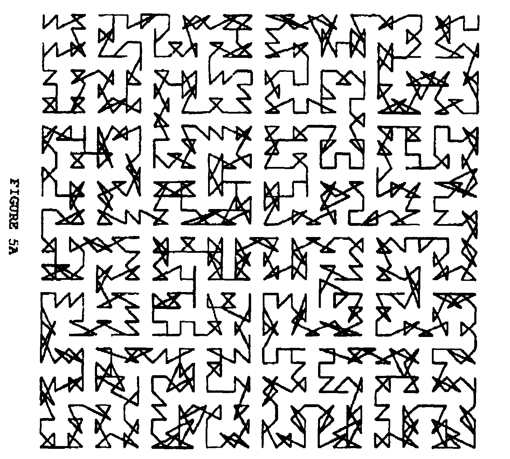

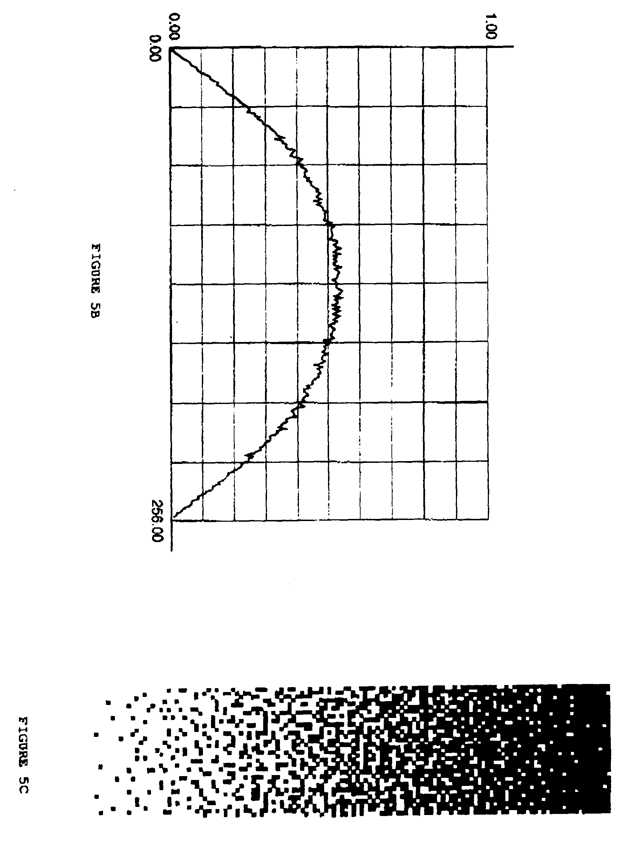

The first method is based on the randomization of the Hilbert path. A Hilbert path is a two dimensional "fractal" curve, that can be obtained by means of a recursive program. Figure 1 shows a few recursions of a process that generates a 32 by 32 points Hilbert path. In annex 1 is shown part of a C program that can be used to obtain such a path. The randomization of this path is straightforward: the path is gone through point by point, and at every point of the path is decided at random whether or not to permutate the current and the next point. This randomization process can be carried out once or more often. Figure 5a shows a Hilbert curve after randomization. Figure 5b shows the total circumference versus integrated dot area plot that is obtained from a two times randomized Hilbert scan. Compared to Figure 2, the plot looks very smooth, with no peaks around the 50% tints level. Figure 5c shows that no textures or patterning occurs along the tone scale.

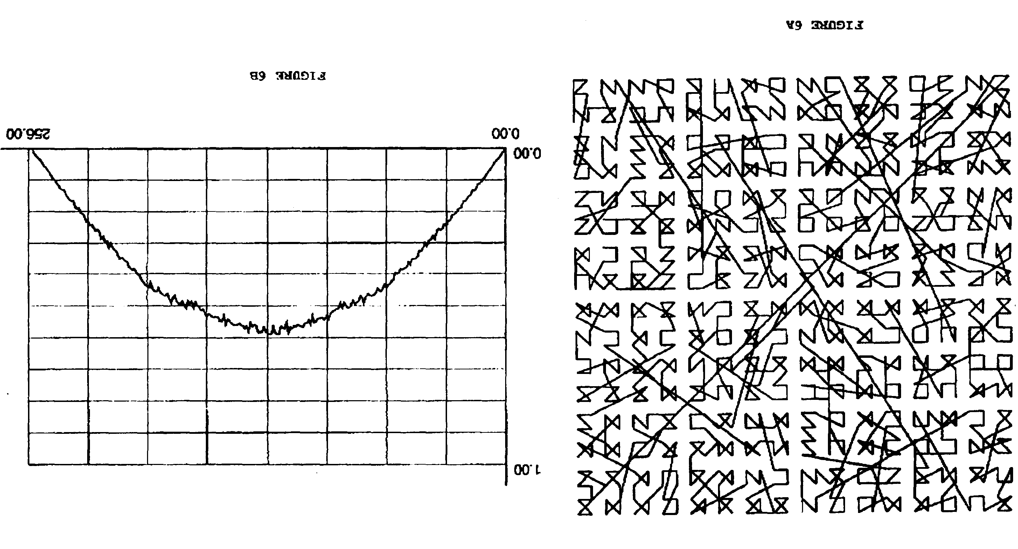

In a second method, a rectangular matrix is recursively subdivided into smaller submatrices. At every subdivision a random permutation ordering number is assigned to every submatrix. The process is stopped when the subdivision comes at the level of the individual matrix elements. An example is given in Figure 6a, in which a 32 by 32 matrix is subdivided recursively in 2x2 matrices with 16x16 elements, after which every submatrix is again subdivided into 2x2 submatrices of 8x8 elements. Every one of these matrices is than again subdivided into 2x2 individual matrix elements. Annex 2 shows a C program to carry out this process, while Figure 6a shows the path that is obtained with it. Also with this method, the total dot circumference versus dot area plot in Figure 6b looks very smooth, while no apparent textures appear. Tests have confirmed that halftones that exhibit this quality, print very stable within a wide range of press parameters. Pressmen were reporting that neutral balance and gradation were stable, and degradees were rendered unusually smoothly. There was no tone jump at any particular tone level, and good shadow detail was easily achieved. Moire was entirely absent, and detail rendition was far superior to Dot Size modulation techniques.

The above methods to obtain paths were implicitly formulated to create matrices for square images or image parts. In most practical situations this will not be the case. Three solutions are open to adjust for this: In a first solution, the original contone image is "padded" with 0 values along its longest side, until it is made square. In a second approach, a path is calculated with the size of the longest side of rectangular image. The points of the path that do not correspond to image pixel positions are simply skipped when the path is passed through. In a third solution, the image is divided into square parts of, for example, 16∗16 elements. A randomized path is obtained for one of these square parts using one of the above methods. After that, the paths are connected together. This method still requires that the image dimensions be a multiple of the dimensions of the square parts, but, since these squares can be relatively small (16∗16 in our example), this poses no real limitation.

It is clear that many variations exist on the schemes that were presented here. In one variation, not a binary, but a multiple level recording unit may be used (like for example a thermal sublimation printer, a slide recorder, an electrophotographic printer....). The thresholding operation in Figure 3 is then replaced by a thresholding with multiple thresholds. The halftone value is dependent on in between which two threshold values the contone pixel value lies. For reasons of performance and flexibility, it is best to implement the thresholding operation in block (40) by a LUT of which the address values correspond to the sum of the error and the pixel values, while the contents contain the corresponding halftone values.

In another variation, the error that is obtained from the difference between the contone pixel and the halftoned pixel value, may, instead of being propagated only to the next pixel in the order of processing, be diffused to more than one of the unprocessed pixels.

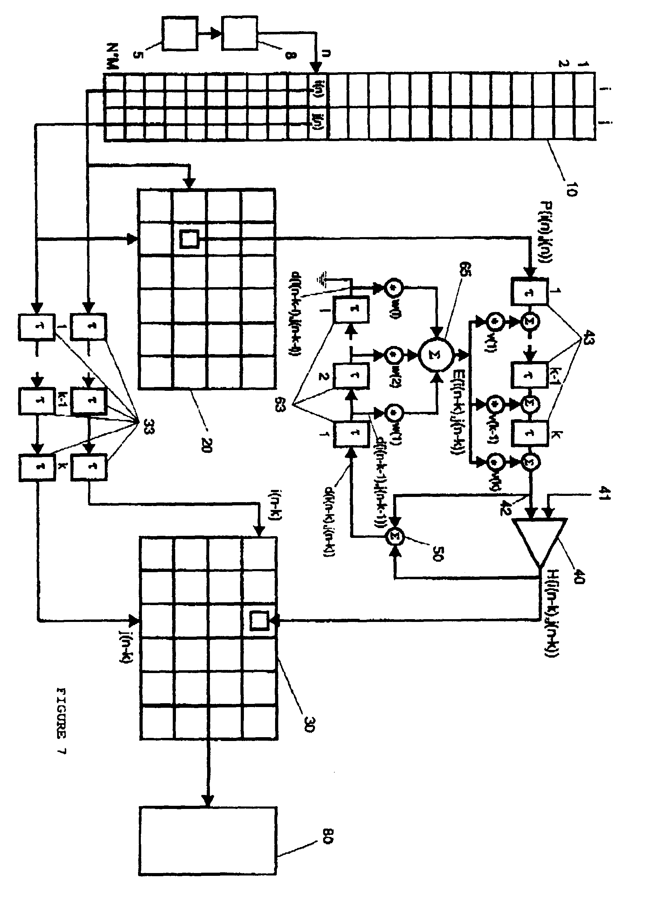

Yet another variation is obtained when the error E in Figure 3 is not obtained from the difference between the current pixel P(i(n),j(n)) and the halftoned value H(i(n),j(n)) of the current pixel, but when it is obtained as a weighted average from the errors of more than one processed pixel. A circuit to do this is disclosed in Figure 7.

Figure 7 shows a more elaborated version of the circuit in Figure 3. The difference lies in the addition of a first set of k shift registers (43) through which the unprocessed pixels are k times delayed, a second set of 1 shift registers (63) through which the difference values between the contone and halftoned values are 1 times delayed, and a third set of k shift registers (33) through which the coordinate values that address the halftone memory (30) are k times delayed. In addition there is an arithmetic unit (65) to obtain a weighted average E(i(n-k),j(n-k)) from the output of the shift registers (63) and to distribute this average to the outputs of the k shift registers (43).

At every cycle of Clock (5), the data in the shift registers (33), (43), and (63) is shifted by one position, and the counter (8) is incremented by one. This will be followed by three global operations which we will call: "halftoning", "error Synthesis", and "error distribution".

The halftoning is explained first. The new value of the counter (8) addresses the coordinate pair i(n),j(n) in the memory block (10), which in its turn addresses the pixel P(i(n),j(n)) in the pixel memory (20). The latter value is applied at the input of the shift register (33). At the output of the same shift register (33) resides at that time a value Q(i(n-k),j(n-k)) which is based on (but not necessarily equal to) the k times delayed pixel value P(i(n-k),j(n-k)). This value Q(i(n-k),j(n-k)) is compared with the threshold value (41), and based on this comparison, a halftone value H(i(n-k),j(n-k)) is determined, which is written into a cell (31) with address (i(n-k),j(n-k)) of the halftone memory (30). The latter address is obtained by having delayed the address values coming from memory block (10) k times by means of the shift register (33).

Next the "error synthesis" part is explained. The difference d(i(n-k),j(n-k)) between value Q(i(n-k),j(n-k)) and H(i(n-k),j(n-k)) is calculated by means of the arithmetic unit (40), and applied at the input of the shift register (63). At the respective outputs of the the 1 cells of shift registers (63) are found the difference values d(i(n-k-1),j(n-k-1)), d(i(n-k-2),j(n-k-2)),... to d(i(n-k-l),j(n-k-l)). From these l values is synthesized by means of the multipliers w(1), w(2), ... to w(l) and the arithmetic unit (65) the error value E(i(n-k),j(n-k)). This error value E(i(n-k),j(n-k)) represents a weighted average of the error that was introduced as a result of the quantization over the area of the 1 previously halftoned pixels.

The last step consists of the distribution of the error E(i(n-k),j(n-k)) to the unprocessed pixel values. This is done by first multiplying the error E(i(n-k)),j(n-k)) with the weights v(1), v(2),... v(k) and by adding the multiplied values to the k respective outputs of the cells of shift register (43). In this way, the error E(i(n-k),j(n-k)) is diffused over the area of the k values in the shift registers (43).

The circuit of figure 7 may be modified by making provision for processing the image in bands in a similar way as described in figure 4.

It will be clear to one skilled in the art that the above described halftoning methods may be implemented by means of hardware or software.

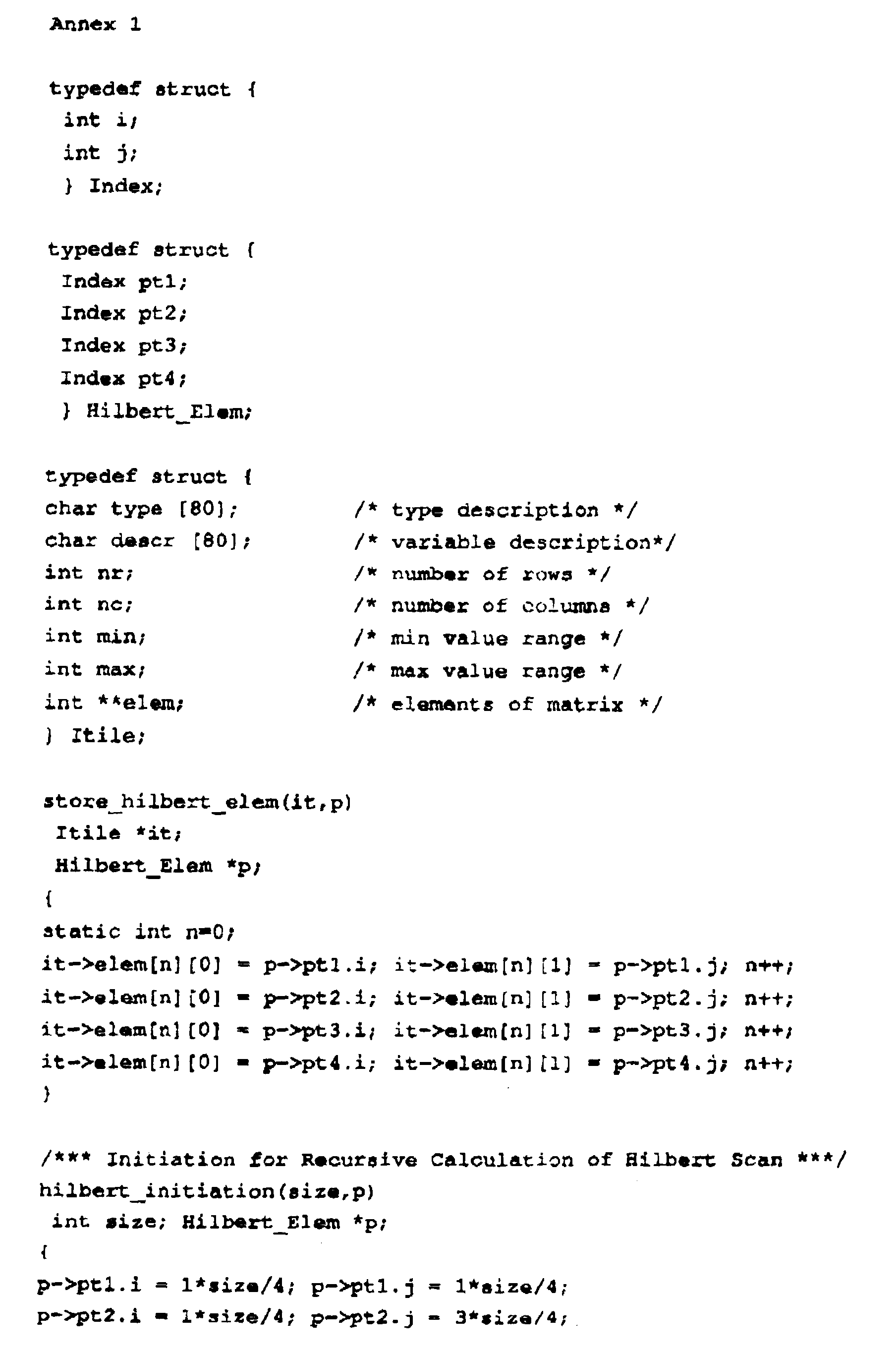

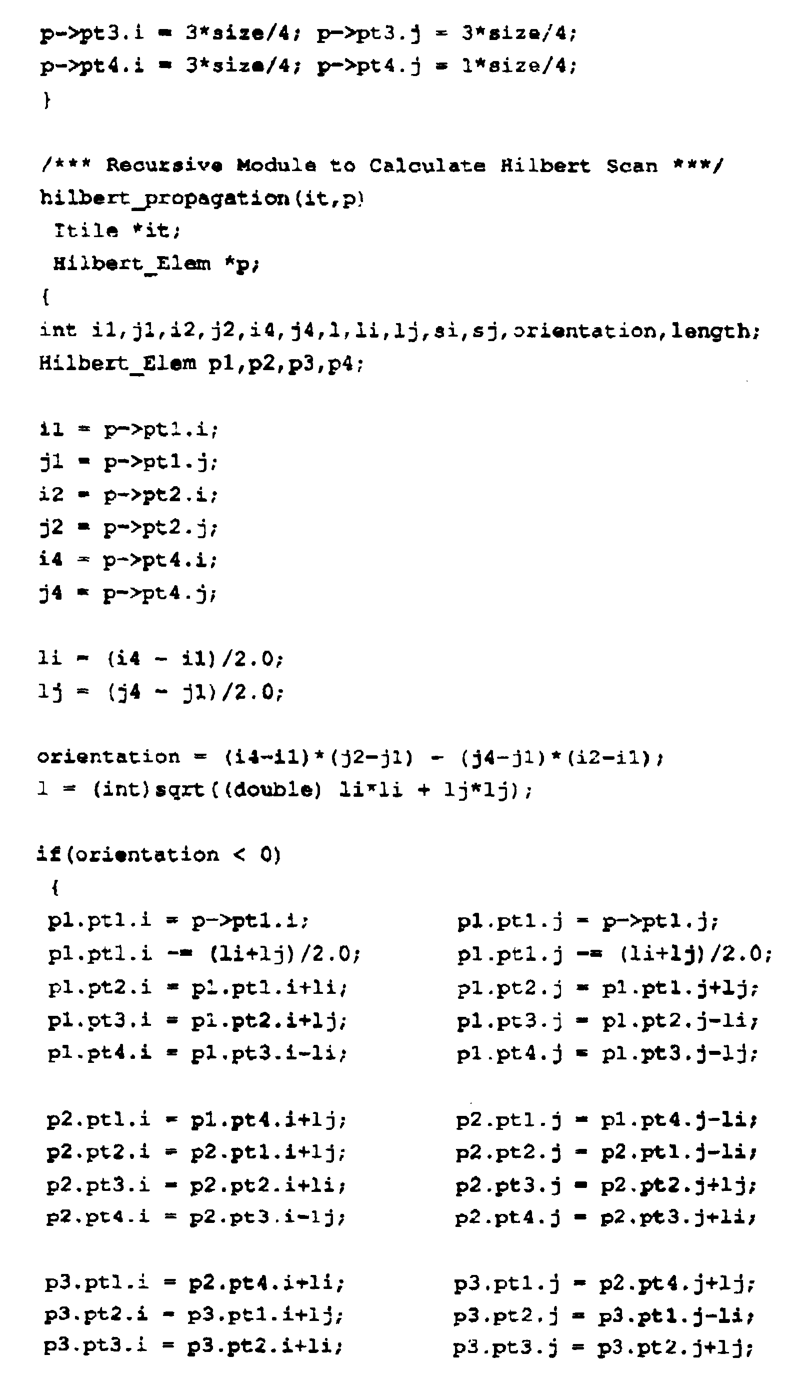

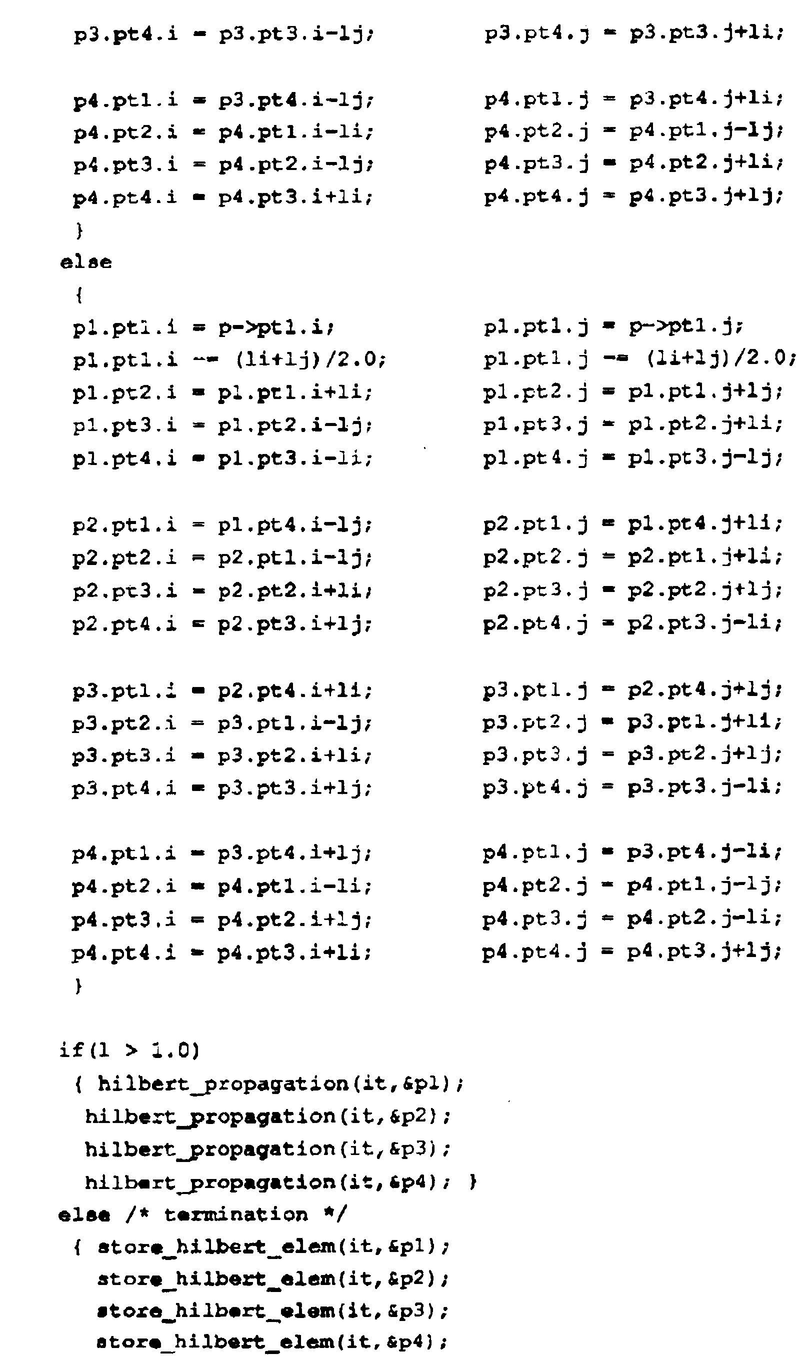

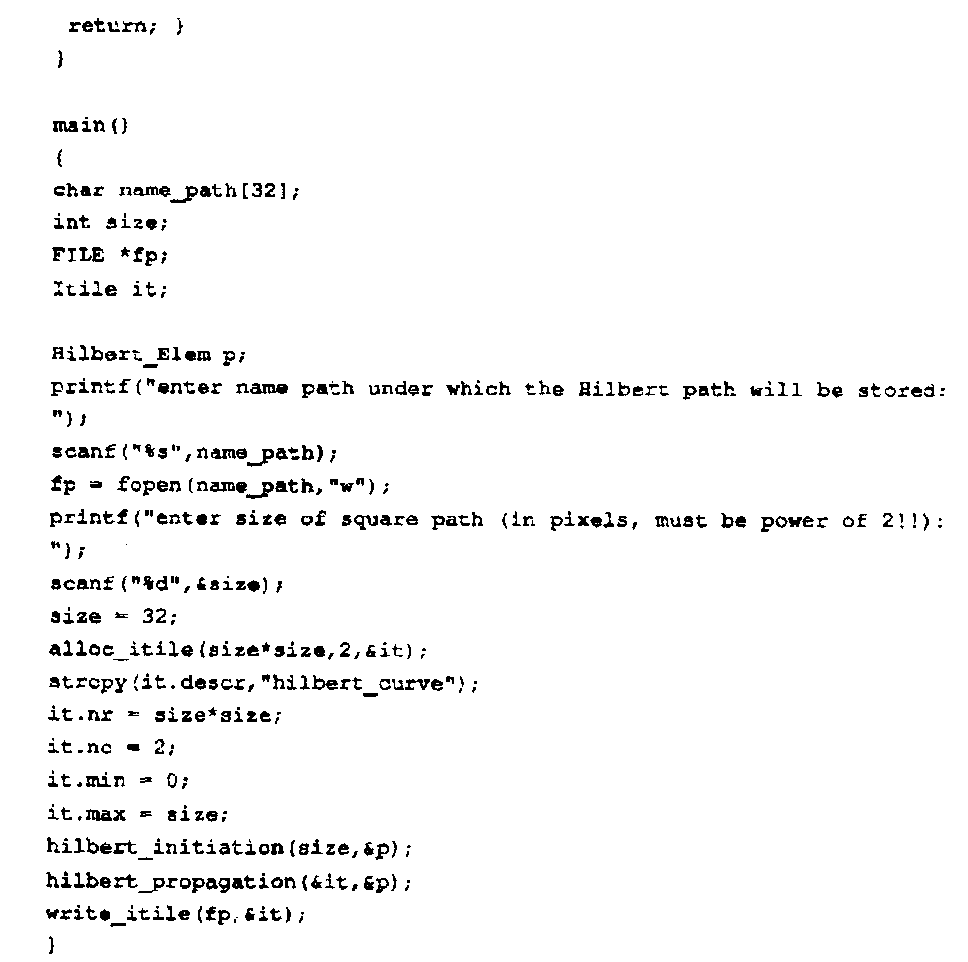

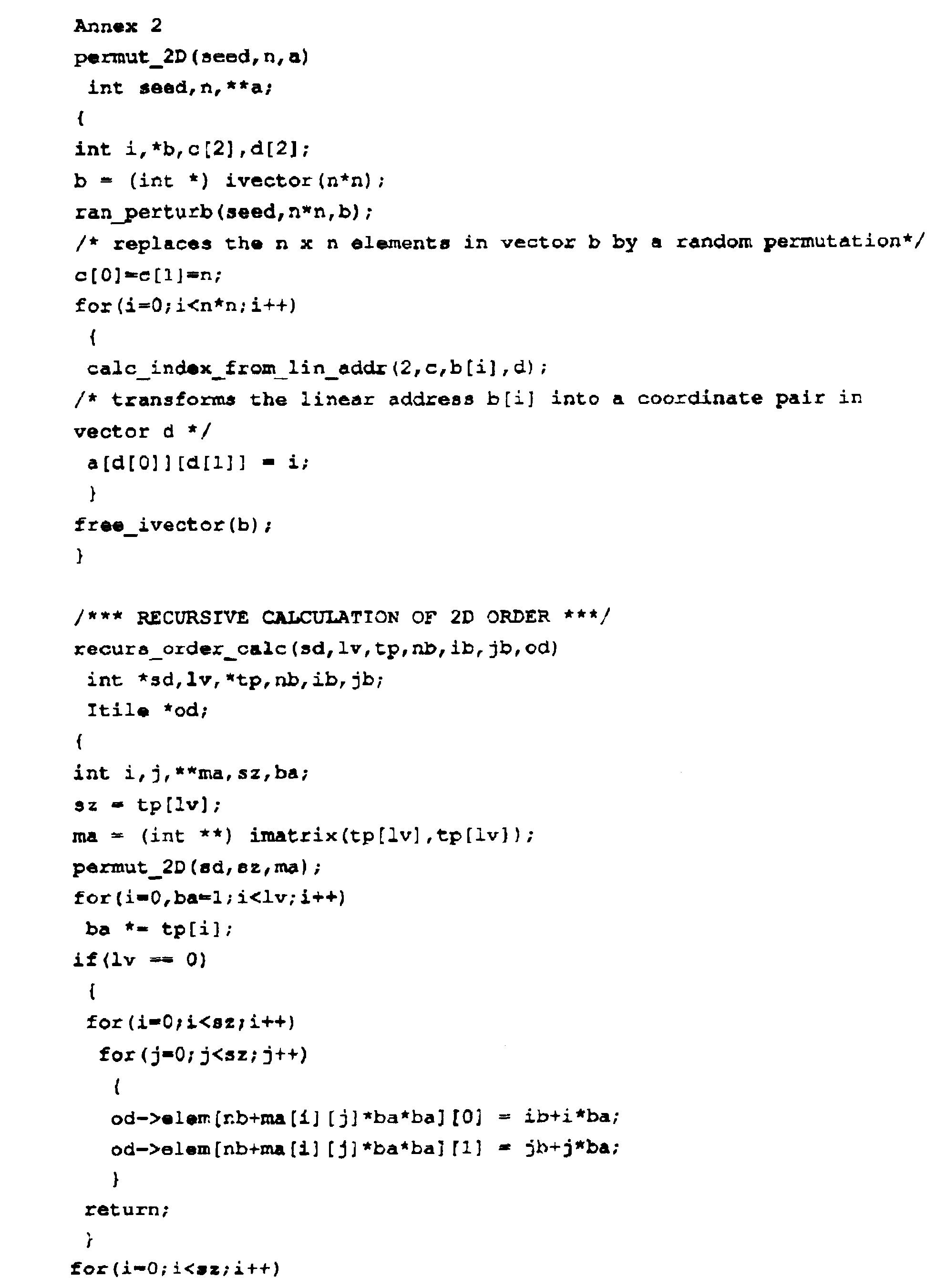

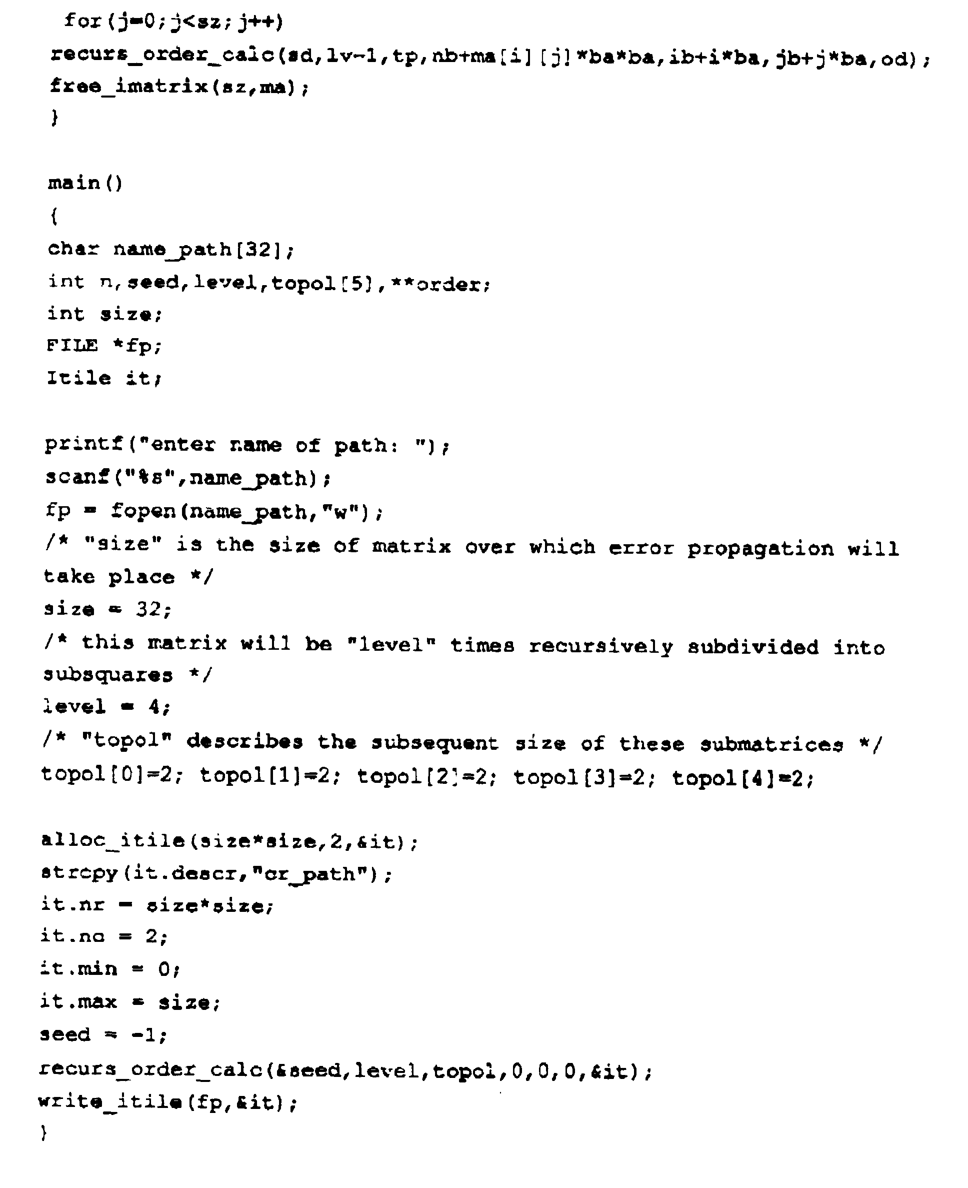

## Claims

1. A method for screening a continuous tone image (20) comprising the steps of:
- selecting an unprocessed image pixel (20) according to a space filling two-dimensional curve (10) and processing said unprocessed image pixel (20) as follows:
- determining from the tone value of said unprocessed image pixel (20) a reproduction value (30) to be used for recording said image pixel on a recording medium (80),
- calculating an error value (50) on the basis of the difference between said tone value of said unprocessed image pixel (20) and said reproduction value (30), said unprocessed image pixel (20) thereby becoming a processed image pixel (42),
- adding said error value (50) to the tone value of an unprocessed image pixel (20) and replacing said tone value with the resulting sum (42) or alternatively distributing said error value over two or more unprocessed image pixels by replacing the tone value of each of said unprocessed image pixels to which said error value will be distributed by the sum of the tone value of the unprocessed image pixel and part of said error,
- repeating the above steps until all image pixels are processed, the method being characterised in that said curve is randomized.

2. A method according to claim 1 wherein said continuous tone image is subdivided in matrices of unprocessed image pixels and all of said image pixels within a matrix is processed before a subsequent matrix is processed.

3. A method according to claim 2 wherein said matrices are processed in a random sequence.

4. A method according to claim 2 wherein said subdividing in matrices occurs recursively until the size of a matrix matches a image pixel and at each level of subdivision a random order of processing matrices of that level is determined.

5. A method according to claim 1 wherein said randomized space filling two dimensional curve is a randomized space filling two dimensional fractal curve.

6. A method according to claim 5 wherein said randomized space filling two dimensional fractal curve is a randomized Hilbert curve or randomized Peano curve.

7. A method according to any of the above claims wherein said determination of said reproduction value proceeds by comparing the tone value of said unprocessed image pixel with one or more threshold values.

8. A method according to any of the above claims wherein said error value calculated is a weighted error value.

9. A method according to any of claims 1 to 6 wherein said determination of said reproduction value proceeds by comparing the tone value of said unprocessed image pixel with a threshold value and the error calculated from the difference of said tone value of said unprocessed image pixel and said reproduction value is added to the tone value of the next unprocessed image pixel selected for processing.

10. A method according to any of the above claims wherein the error is a weighted average of the differences of the tone value of at least two image pixels and their corresponding reproduction values.

## Patentansprüche

1. Verfahren zur Rasterung eines Halbtonbildes (20) mit folgenden Schritten:
- Auswählen eines unverarbeiteten Bildpunktes (20) nach einer raumfüllenden zweidimensionalen Kurve (10) und Verarbeiten des besagten unverarbeiteten Bildpunktes (20) wie folgt:
- Bestimmen aus dem Tonwert des besagten unverarbeiteten Bildpunktes (20) einen zur Aufzeichnung des besagten Bildpunktes auf einem Aufzeichnungsmedium (80) zu benutzenden Wiedergabewert (30),
- Berechnen eines Fehlerwertes (50) auf Grundlage der Differenz zwischen dem besagten Tonwert des besagten unverarbeiteten Bildpunktes (20) und dem besagten Wiedergabewert (30), wobei der besagte unverarbeitete Bildpunkt (20) dadurch ein verarbeiteter Bildpunkt (42) wird,
- Hinzuaddieren des besagten Fehlerwertes (50) zum Tonwert eines unverarbeiteten Bildpunktes (20) und Ersetzen des besagten Tonwertes durch die resultierende Summe (42) bzw. als Alternative Verteilen des besagten Fehlerwertes über zwei oder mehrere unverarbeitete Bildpunkte durch Ersetzen des Tonwertes jedes der besagten unverarbeiteten Bildpunkte, zu denen der besagte Fehlerwert verteilt wird, durch die Summe aus Tonwert des unverarbeiteten Bildpunktes und Teil des besagten Fehlers,
- Wiederholen der obigen Schritte, bis alle Bildpunkte verarbeitet sind, wobei das Verfahren dadurch gekennzeichnet ist, daß die besagte Kurve in Zufallswerte umgerechnet wird.

2. Verfahren nach Anspruch 1, wobei das besagte Halbtonbild in Matrizen unverarbeiteter Bildpunkte unterteilt wird und alle besagten Bildpunkte innerhalb einer Matrix vor Verarbeitung einer nachfolgenden Matrix verarbeitet werden.

3. Verfahren nach Anspruch 2, wobei die besagten Matrizen in einer Zufallsfolge verarbeitet werden.

4. Verfahren nach Anspruch 2, wobei das besagte Unterteilen in Matrizen rekursiv stattfindet, bis die Größe einer Matrix an einen Bildpunkt angepaßt ist, und auf jeder Unterteilungsstufe eine zufallsmäßige Verarbeitungsabfolge von Matrizen dieser Stufe bestimmt wird.

5. Verfahren nach Anspruch 1, wobei die besagte in Zufallswerte umgerechnete raumfüllende zweidimensionale Kurve eine in Zufallswerte umgerechnete raumfüllende zweidimensionale Fraktalkurve ist.

6. Verfahren nach Anspruch 5, wobei die besagte in Zufallswerte umgerechnete raumfüllende zweidimensionale Fraktalkurve eine in Zufallswerte umgerechnete Hilbert-Kurve oder in Zufallswerte umgerechnete Peano-Kurve ist.

7. Verfahren nach einem der obigen Ansprüche, wobei die besagte Bestimmung des besagten Wiedergabewertes durch Vergleichen des Tonwertes des besagten unverarbeiteten Bildpunktes mit einem oder mehreren Schwellwerten stattfindet.

8. Verfahren nach einem der obigen Ansprüche, wobei der besagte berechnete Fehlerwert ein gewichteter Fehlerwert ist.

9. Verfahren nach einem der Ansprüche 1 bis 6, wobei die besagte Bestimmung des besagten Wiedergabewertes durch Vergleichen des Tonwertes des besagten unverarbeiteten Bildpunktes mit einem Schwellwert stattfindet und der aus der Differenz des besagten Tonwertes des besagten unverarbeiteten Bildpunktes und dem besagten Wiedergabewert berechnete Fehler zum Tonwert des nächsten zur Verarbeitung ausgewählten unverarbeiteten Bildpunktes hinzuaddiert wird.

10. Verfahren nach einem der obigen Ansprüche, wobei der Fehler ein gewichtetes Mittel der Differenz des Tonwertes von mindestens zwei Bildpunkten und ihren entsprechenden Wiedergabewerten ist.

## Revendications

1. Procédé de tramage d'une image en demi-teintes (20) comprenant les étapes de:
- sélection d'un pixel d'image non traité (20) conformément à une courbe bidimensionnelle de remplissage d'espace (10) et traitement dudit pixel d'image non traité (20) comme suit:
- détermination à partir de la valeur de teinte dudit pixel d'image non traité (20) d'une valeur de reproduction (30) à utiliser pour enregistrer ledit pixel d'image sur un support d'enregistrement (80),
- calcul d'une valeur d'erreur (50) en fonction de la différence entre ladite valeur de teinte dudit pixel d'image non traité (20) et ladite valeur de reproduction (30), ledit pixel d'image non traité (20) devenant ainsi un pixel d'image traité (42),
- addition de ladite valeur d'erreur (50) à la valeur de teinte d'un pixel d'image non traité (20) et remplacement de ladite valeur de teinte par la somme résultante (42) ou en variante distribution de ladite valeur d'erreur sur deux ou plusieurs pixels d'image non traités en remplaçant la valeur de teinte de chacun desdits pixels d'image non traités auxquels ladite valeur d'erreur va être distribuée par la somme de la valeur de teinte du pixel d'image non traité et d'une partie de ladite erreur.
- répétition des étapes ci-dessus jusqu'à ce que tous les pixels soient traités, le procédé étant caractérisé en ce que ladite courbe est mise sous forme aléatoire.

2. Procédé conformément à la revendication 1, dans lequel ladite image en demi-teintes est sous-divisée en matrices de pixels d'image non traités et la totalité desdits pixels d'image à l'intérieur d'une matrice est traitée avant qu'une matrice suivante ne soit traitée.

3. Procédé conformément à la revendication 2, dans lequel lesdites matrices sont traitées en une séquence aléatoire.

4. Procédé conformément à la revendication 2, dans lequel ladite sous-division en matrices se produit de manière récursive jusqu'à ce que la taille d'une matrice corresponde à un pixel d'image et à chaque niveau de sous-division un ordre aléatoire de traitement de matrices de ce niveau est déterminé.

5. Procédé conformément à la revendication 1, dans lequel ladite courbe bidimensionnelle de remplissage d'espace mise sous forme aléatoire est une courbe fractale bidimensionnelle de remplissage d'espace mise sous forme aléatoire.

6. Procédé conformément à la revendication 5, dans lequel ladite courbe fractale bidimensionnelle de remplissage d'espace mise sous forme aléatoire est une courbe de Hilbert mise sous forme aléatoire ou une courbe de Peano mise sous forme aléatoire.

7. Procédé conformément à l'une quelconque des revendications ci-dessus, dans lequel ladite détermination de ladite valeur de reproduction se déroule en comparant la valeur de teinte dudit pixel d'image non traité à une ou plusieurs valeurs de seuil.

8. Procédé conformément à l'une quelconque des revendications ci-dessus, dans lequel ladite valeur d'erreur calculée est une valeur d'erreur pondérée.

9. Procédé conformément à l'une quelconque des revendications 1 à 6, dans lequel ladite détermination de ladite valeur de reproduction se déroule en comparant la valeur de teinte dudit pixel d'image non traité à une valeur de seuil et l'erreur calculée à partir de la différence de ladite valeur de teinte dudit pixel d'image non traité et de ladite valeur de reproduction est ajoutée à la valeur de teinte du prochain pixel d'image non traité sélectionné à traiter.

10. Procédé conformément à l'une quelconque des revendications ci-dessus, dans lequel l'erreur est une moyenne pondérée des différences de la valeur de teinte d'au moins deux pixels d'image et de leurs valeurs de reproduction correspondantes.
